# EUROPÄISCHE PATENTSCHRIFT

(11) **EP 3 253 555 B1**
(45) Veröffentlichungstag und Bekanntmachung des Hinweises auf die Patenterteilung: **24.11.2021**
(21) Anmeldenummer: 16706321.3
(22) Anmeldetag: 08.02.2016
(51) Int. Cl.: B29C 49/42, B29C 49/78

(54) **VERFAHREN ZUM KALIBRIEREN ZUMINDEST EINES BEHANDLUNGSELEMENTES**
METHOD FOR CALIBRATING AT LEAST ONE TREATMENT ELEMENT
PROCÉDÉ DE CALIBRAGE D'AU MOINS UN ÉLÉMENT DE TRAITEMENT

(30) Priorität: 06.02.2015 DE 102015101769
(43) Veröffentlichungstag der Anmeldung: 13.12.2017
(73) Patentinhaber: Krones AG, 93073 Neutraubling (DE)
(72) Erfinder: KAMMERL, Martin, 93073 Neutraubling (DE); SENN, Konrad, 93073 Neutraubling (DE)
(74) Vertreter: Bittner, Bernhard
(86) Internationale Anmeldenummer: PCT/EP2016/052627
(87) Internationale Veröffentlichungsnummer: WO 2016/124786

(56) Entgegenhaltungen:
- EP-A2- 2 210 731
- DE-A1-102009 047 541
- US-A1- 2004 024 560
- US-A1- 2009 272 888

## Beschreibung

Die vorliegende Erfindung betrifft ein Verfahren zum Kalibrieren zumindest eines Behandlungselementes, insbesondere zumindest eines Temperatursensors einer Behandlungsstation sowie eine entsprechende Vorrichtung zum Kalibrieren zumindest eines Behandlungselementes, insbesondere zumindest eines Temperatursensors einer Behandlungsstation, sowie eine Vorrichtung zum Erwärmen von Kunststoffvorformlingen gemäß den jeweiligen Oberbegriffen der Patentansprüche 1 und 12.

Das hier beschriebene Verfahren umfasst dabei einen ersten Schritt, in welchem zunächst ein Messvorformling bereitgestellt wird und danach mittels zumindest eines Messelementes zumindest ein erster Messwert des Messvorformlings vor oder nach dessen Behandlung durch eine Behandlungsstation zum Behandeln von Kunststoffvorformlingen gemessen wird.

Dies kann heißen, dass der gemessene Messwert einer sich nach der Messung anschließenden, insbesondere mathematischen Bearbeitung unterzogen werden, um somit die gemessenen Messwerte einer weiteren detaillierten Analyse unterziehen zu können.

Der Messwert kann dabei ein Druckwert, ein Temperaturwert, ein Wert einer Kraft, ein Wert eines Momentes, ein Positionswert, eine Zeitdauer, eine Durchflussmenge, ein Formatwert, ein Geschwindigkeitswert, ein Strahlungswert (z. B. Mikrowellenstrahlung), insbesondere ein Strahlungsstärkewert, und/oder eine Keimanzahl sein. Mit anderen Worten kann das wenigstens eine Messelement so ausgebildet sein, dass es einen Druckwert, einen Temperaturwert, einen Wert einer Kraft, einen Wert eines Moments, einen Positionswert, eine Zeitdauer, eine Gas- oder Flüssigkeitsmenge (z. B. einen Volumenwert), eine Geschwindigkeit, eine Strahlungsstärke oder Feldstärke und/oder eine Keimanzahl messen kann. Das Messelement kann insbesondere mehrere Messsensoren umfassen, wobei jeder der Messsensoren einen oder mehrere der oben genannten Werte bestimmen oder messen kann. Insbesondere kann das Messelement mehrere Messsensoren des gleichen Typs umfassen.

Der Formatwert steht dabei für bestimmte geometrische oder chemische Werte, die sich auf eine oder mehrere geometrische Größen oder eine materielle Zusammensetzung von zu produzierenden Flaschen oder Vorformlingen beziehen, die wiederum bestimmten Formatteilen, insbesondere Behandlungseinheiten, der Blasmaschine, der Abfüllmaschine und/oder der Etikettiervorrichtung zugeordnet sein können.

Der wenigstens eine Messwert kann insbesondere einem physikalischen Behandlungsparameter von Behältnissen (Preforms und/oder Flaschen) in einer Blasmaschine, einer Abfüllmaschine (Füller) und/oder einer Etikettiervorrichtung entsprechen.

Das Messelement kann beispielsweise zur Temperaturmessung daher optische und/oder elektrische Temperatursensoren umfassen, welche in Kontakt mit dem Messvorformling oder auch kontaktlos die jeweilige von dem Messvorformling abgestrahlte elektromagnetische Strahlung, insbesondere Wärmestrahlung, messen. Zudem kann das Messelement eine Verarbeitungs- und Speichereinheit umfassen, mittels derer die gemessen Temperaturmesswerte gespeichert und verarbeitet werden.

Allerdings löst auch diese Druckschrift nicht die Aufgabe, wonach bei einer Anlage, die aus mehreren gleichartigen, parallel geschalteten Einzelprozess-Stationen besteht, die Stationen zueinander kalibriert werden müssen, um einen gleichmäßigen Output zu liefern.

Einzelprozessstationen, d.h. Einzelprozessbehandlungsstationen, beispielsweise Mikrowellenöfen, sind nämlich in der Regel ein in sich geschlossenes System, das in der Regel autark seinen Prozess bedienen kann.

Wenn beispielsweise mehrere dieser Stationen zu einer Anlage kombiniert werden, z.B. auf einem Rundläufer, müssen die Temperatursensoren der einzelnen Stationen zueinander synchronisiert werden, um einen Offset zwischen den Stationen zu vermeiden, der sich dann in der Qualität des Outputs bemerkbar macht. In diesem Zusammenhang beschreibt "offset" jedwede parameterabhängige und durch Parameter definierte Abweichung von einem Normbetriebswert oder einem Normbetriebsbereich.

Temperatursensoren, vor allem berührungslose Temperatursensoren, wie z.B. Pyrometer, reagieren nämlich sehr sensibel auf Änderungen im Prozess und ihrer Umgebung. Bauteiltoleranzen, Hintergrundstrahlung, Temperaturänderung am Sensorgehäuse, unterschiedliche Emissionswerte, Alterungseinflüsse und viele weitere Einflussfaktoren wirken sich auf die Messgenauigkeit der Temperatursensoren aus.

Bei mehreren Stationen können diese Faktoren unterschiedlich stark ausgeprägt sein, was dann zu einer mehr oder minder starken Fehlmessung in den jeweiligen Stationen führen kann.

Insofern konnte daher bisher der Stand der Technik keine Möglichkeit bieten, die einzelnen Behandlungsstationen innerhalb einer Anlage beispielsweise zum Behandeln von Kunststoffvorformlingen anhand einer vorher ausgewählten Normkurve anzupassen, um die obig beschriebenen einzelnen Abweichungen gegenüber einer derartig gemeinsam gewählten Normkurve zu minimieren.

Ausgehend hiervon ist es daher Aufgabe der vorliegenden Erfindung, die oben genannten Probleme zu beseitigen und daher auf besonders einfache, kostengünstige und betriebsstabile Art und Weise eine Möglichkeit anzugeben, mittels der eine Kalibrierung, d.h. Einstellung eines Behandlungselementes auf eine Normkurve besonders einfach ermöglicht wird. Insbesondere kann es sich bei der Normkurve um eine Normtemperaturkurve handeln.

Diese Aufgabe wird nun durch den Gegenstand des Patentanspruches 1 gelöst, so dass die vorliegende Erfindung unter anderem von der Idee Gebrauch macht, dass mittels zumindest einer Kalibriereinrichtung, welche eine Abweichung des gemessenen Messpunkts von einem Referenzpunkt ermittelt, diese Abweichung zumindest teilweise durch Anpassung von Behandlungsparametern der Behandlungsstation verringert wird. Dabei umfassen Behandlungsparameter auch jegliche Steuerungs- und/oder Regelungswerte zum Regeln und/oder Steuern der Behandlungsstation während des Prozesses.

Mittels der obigen Anpassung der Messwerte an Normmesswerte über die hier beschriebene Kalibriereinrichtung kann es daher besonders vorteilhaft vermieden werden, dass die einzelnen Behandlungsparameter einer Behandlungsstation in ungewollter Art und Weise von vorgebbaren Normwerten abweichen.

Gemäß zumindest einer Ausführungsform des hier beschriebenen Verfahrens zum Kalibrieren zumindest eines Behandlungselementes, insbesondere zumindest eines Temperatursensors, einer Behandlungsstation, zum Behandeln von Kunststoffvorformlingen umfasst dieses einen ersten Schritt, mittels dessen zunächst ein Messvorformling bereitgestellt wird, wobei durch zumindest ein Messelement zumindest ein erster Messwert des Messvorformlings vor oder nach dessen Behandlung durch die Behandlungsstation gemessen wird, und anhand zumindest dieses Messwerts ein, insbesondere mathematischer, Messpunkt durch das Messelement aufgenommen wird, und wobei zumindest eine Kalibriereinrichtung eine Abweichung des gemessenen Messpunkts von einem Referenzpunkt ermittelt, und diese Abweichung zumindest teilweise durch Anpassung von Behandlungsparametern der Behandlungsstation verringert.

Gemäß zumindest einer Ausführungsform wird ein zweiter Messwert des Messvorformlings, während oder nach der Behandlung durch die Behandlungsstation, durch das Messelement oder ein weiteres Messelement gemessen, und es wird anhand zumindest dieser beiden Messwerte eine mathematische Messkurve, insbesondere eine mathematische Messgerade, durch das Messelement aufgenommen wird, wobei zumindest die Kalibriereinrichtung eine Abweichung der gemessenen Messkurve von einer mathematischen Referenzkurve ermittelt, und diese Abweichung zumindest teilweise durch Anpassung von Behandlungsparametern der Behandlungsstation verringert wird.

Insofern kann ein und dasselbe Messelement sowohl den ersten Messwert als auch den zweiten Messwert messen. Alternativ hierzu können jedoch die Messung des ersten Messwertes und die Messung des zweiten Messwertes durch zwei oder mehrere voneinander verschiedene Messelemente, welche auch unterschiedlich entlang innerhalb oder außerhalb der Behandlungsstation angeordnet sein können, gemessen werden.

Wird der Messvorformling beispielsweise während der Behandlung durch und innerhalb der Behandlungsstation erwärmt, so handelt es sich bei dem zweiten Messwert um einen solchen Temperaturwert, welcher einem dann erwärmten Messvorformling entspricht, wobei somit der erste Messwert einem solchen Temperaturwert entspricht, bei welchem der Messvorformling noch auf Raumtemperatur (kalt) ist.

Weiter wird gemäß dem beanspruchten Verfahren anhand zumindest dieser beiden Messwerte eine mathematische Messkurve, insbesondere eine mathematische Messgerade, durch das Messelement oder das weitere Messelement aufgenommen. Mit anderen Worten kann daher die Verarbeitungseinheit des Messelementes eine solche sein, welche anhand der beiden Messwerte oder auch mehrerer Messwerte, beispielsweise mittels eines mathematischen Iterationsalgorithmus eine Kurve entlang und/oder durch diese beiden Messwerte legt.

Dabei bezeichnet eine "mathematische Messkurve" eine solche insbesondere zweidimensionale, vorzugsweise stetigen, Kurve, welche anhand zumindest zweiter gemessener Messwerte beispielsweise mittels eines numerischen Rechenverfahrens durch zumindest ein Messelement und/oder die Kalibriereinrichtung erzeugt ist. Mit anderen Worten kann dann die Messkurve durch die zumindest zwei gemessenen Messwerte hindurchgelegt sein.

Verfahren, bei denen während einer Erwärmung von Kunststoffvorformlingen vor, während oder nach dem Erwärmen mittels eines Messelementes die Temperatur der Kunststoffvorformlinge gemessen wird, sind jedoch bereits aus dem Stand der Technik bekannt. Hierbei sei beispielsweise auf die EP 2210731 A2 verwiesen, bei der die Preform-Temperatur entweder vor und/oder während und/oder nach einer Mikrowellenbestrahlung gemessen wird. In dieser Druckschrift wird beispielsweise eine Temperaturmessung mittels eines Pyrometers vorgenommen.

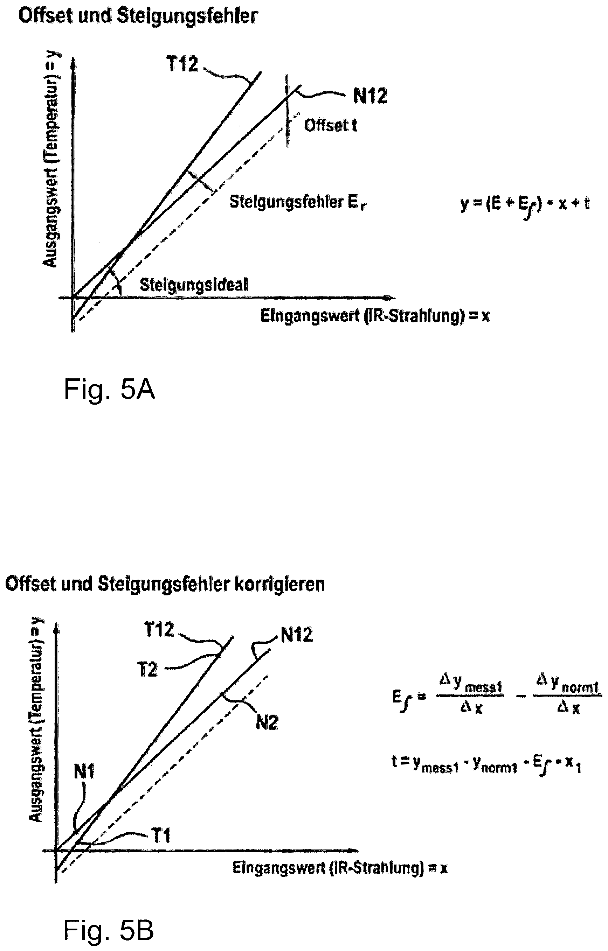

Generell kann daher beispielsweise eine Angleichung der gemessenen Temperaturkurve an die Referenz(temperatur)kurve wie folgt geschehen (siehe Figuren 5A und 5B):
Zur Erstellung der Temperaturkurve werden somit bevorzugt zumindest zwei Messwerte gemessen, beispielsweise mittels eines mathematischen Algorithmus, so dass durch diese beiden Messwerte eine Messwertgerade, beispielweise durch das Messelement und/oder die Kalibiereinrichtung erstellt werden kann, welche dann mit der Referenz-Geraden (Referenz(temperatur)kurve) verglichen wird.

Bei mehr als zwei Messwerten kann auch eine nicht-lineare Temperaturkurve ermittelt werden und auch eine Nichtlinearität im Messverhalten korrigieren. Ein Kernelement der vorliegenden Erfindung ist jedoch, dass für alle Behandlungsstationen stets dieselbe Referenztemperaturkurve zur Angleichung verwendet wird. Das hiermit beanspruchte Verfahren kann daher frei von einem direkten oder indirekten Vergleich der einzelnen Temperaturkurven einzelner Behandlungsstationen untereinander sein. Die einzige Bezugsgerade ist daher die Referenztemperaturkurve. Dieses Modell kann daher selbstverständlich auch auf jedwede anderen Messwerte, abgesehen von Temperaturwerten, alternativ oder zusätzlich angewandt werden.

Gemäß zumindest einer Ausführungsform des Verfahrens wird an zumindest zwei Behandlungsstationen jeweils zumindest ein erster Messwert und/oder zumindest ein zweiter Messwert gemessen, wobei die sich daraus ergebenden Messkurven mittels der Kalibriereinrichtung an die Referenzkurve angepasst werden.

Denkbar ist, dass hierzu bereits eine Referenzkurve in dem Messelement hinterlegt ist und somit für eine Kalibrierung lediglich nur noch die beiden Messwerte durch das Messelement gemessen werden müssen.

Dazu kann der erste Messwert beispielsweise vor einem Erwärmen des Messvorformlings innerhalb der Behandlungsstation gemessen werden, so dass dieser erste Temperaturmesswert die Temperatur wiederspiegelt, welche der Messvorformling in einem kalten Zustand hat.

Nun kann dieser Messvorformling in den Behandlungsstationen während oder nach dieser Behandlung innerhalb der einzelnen Behandlungsstationen erwärmt werden, sodass der zweite Temperaturmesswert aufgenommen werden kann. Während oder nach der Messung des zweiten Temperaturmesswertes hat daher der Messvorformling grundsätzlich eine höhere Temperatur als vor der Messung.

Aus den jeweiligen Differenzen der Temperaturmesswerte kann nun der Offset und beispielsweise auch eine Steigung der mathematischen Temperaturkurve gemessen und durch das Messelement errechnet werden.

Nach Errechnen der mathematischen Temperaturkurve wird diese durch das Messelement und/oder mittels der Kalibriereinrichtung mit einer beispielsweise bereits in dem Messelement und/oder in der Kalibiereinrichtung hinterlegten Referenztemperaturkurve verglichen.

Die Kalibriereinrichtung ist nun eine solche Einrichtung, welche in der Lage ist, einzelne Behandlungsparameter der Behandlungsstation derart zu verstellen, dass eine Abweichung, d.h. der Offset der gemessenen Temperaturkurve von der mathematischen Normtemperaturkurve sich zumindest innerhalb eines Normabweichungsbereiches im Rahmen der Fertigungstoleranz befindet.

Darüber hinaus ist denkbar, dass zu einer Nachvermessung der Messvorformling wieder in die einzelnen Behandlungsstationen eingebracht wird und dort nochmals im Rahmen eines zeitlich nachfolgenden Kontrollmessvorganges die zweiten Messwerte gemessen werden, so dass festgestellt werden kann, ob die Offset-Minimierung mittels der Kalibriereinrichtung erfolgreich war. War diese nicht erfolgreich, so kann die Kalibriereinrichtung eine Nachjustierung vornehmen. Dies kann beispielsweise im Rahmen einer Korrekturschleife vollzogen werden, so dass sich durch wiederholtes Nachtesten die Kalibriereinrichtung an den Referenzbereich, insbesondere eine Referenzkurve, hin iteriert.

Ob daher der Messvorformling zwischen den Stationen zur Nachvermessung wieder in die Messvorrichtung eingebracht wird und/oder ob der Messvorformling für alle Behandlungsstationen oder je ein Messvorformling für eine einzelne Behandlungsstation verwendet wird und ob eine Zentrale des Messelementes, die den Produktstrom integriert, vor oder nach der Behandlungsstation eingebaut ist oder extern in einem Kalibrierstand untergebracht ist, ist abhängig von dem jeweiligen Aufbau der Station und wird hiermit ebenso explizit beansprucht.

Gemäß zumindest einer Ausführungsform ist zumindest ein Messelement in Form einer zentralen Messeinrichtung ausgebildet, welche außerhalb der Behandlungsstation angeordnet ist, wobei mittels der Messelemente der erste Messwert und/oder der zweite Messwert gemessen wird. Wie obig bereits erwähnt, kann daher das Messelement beispielsweise innerhalb eines Kalibrierstandes untergebracht sein und wird somit nicht mit der Behandlungsstation mitbewegt. Insofern spiegelt ein derart beschriebenes Messelement einen statischen Aufbau der Messeinrichtung wieder.

Gemäß zumindest einer Ausführungsform ist zumindest ein Messelement innerhalb der Behandlungsstation dezentral verbaut, wobei sich dieses insbesondere mit der Behandlungsstation mitbewegt wird und mittels der Messelemente der erste Messwert und/oder der zweite Messwert gemessen wird

Dies stellt eine zusätzliche oder auch alternative Ausführungsform dar, bei welcher das Messelement anstatt beispielsweise innerhalb eines Kalibrierstands untergebracht zu werden innerhalb jeweils einer Behandlungsstation verbaut ist. Mit anderen Worten werden daher die zweiten Messwerte, beispielsweise beständig, während oder nach der Behandlung gemessen.

Gemäß zumindest einer Ausführungsform wird die Referenzkurve mittels zumindest eines Messelementes aufgenommen, indem durch das Messelement zumindest ein erster Referenzwert des Messvorformlings vor oder nach dessen Behandlung innerhalb der Behandlungsstation gemessen wird und ein zweiter Referenzwert des Messvorformlings während oder nach der Behandlung innerhalb der Behandlungsstation durch ein weiteres Messelement gemessen wird, wobei anhand zumindest dieser beiden Referenzwerte die Referenzkurve, insbesondere die mathematische Referenzgerade, durch das Messelement erzeugt wird.

Mit anderen Worten werden daher sowohl die Referenzkurve als auch die Messkurve selbst vor, während und/oder nach dem Verfahren zum Kalibrieren separat nochmals eingestellt und gemessen.

Dabei bezeichnet eine "mathematische Referenzkurve" eine solche insbesondere zweidimensionale, vorzugsweise stetige, Kurve, welche anhand zumindest zweiter gemessener Normmesswerte beispielsweise mittels eines numerischen Rechenverfahrens durch zumindest ein Messelement und/oder die Kalibriereinrichtung erzeugt ist. Mit anderen Worten kann dann die Messkurve durch die zumindest zwei gemessenen Messwerte hindurchgelegt sein.

Insofern ist daher in einer derartigen Ausführungsform die Referenzkurve nicht schon von selbst in dem Messelement und/oder Kalibriereinrichtung beispielsweise dauerhaft hinterlegt, sondern es wird vor jedem Verfahren zum Kalibrieren die Normtemperaturkurve separat, vorzugsweise speziell angepasst auf das Kalibrierverfahren, gemessen, gespeichert und dann prozesstechnisch verarbeitet.

Denkbar ist daher bei einer derartigen Variante, dass die beiden Normmesswerte außerhalb der Behandlungsstation gemessen werden. Dazu kann ein geeignetes Messelement, beispielsweise ein Temperatursensor, insbesondere berührungslos oder auch in Kontakt mit dem Messvorformling außerhalb der Behandlungsstationen untergebracht sein.

Durch dieses außerhalb jeder der Behandlungsstationen angeordnete Messelement wird nun an dem entsprechenden Messvorformling zunächst ein erster Normmesswert (kalt) aufgenommen. Während dieser Messung weist daher der Messvorformling beispielsweise Raumtemperatur auf.

Anschließend wird dieser Messvorformling nacheinander beispielsweise in jede Behandlungsstation eingebracht, wobei auch hierbei ein Messwert, nämlich der erste Messwert, aufgenommen wird.

Danach wird der Messvorformling auf eine vorher definierte Temperatur aufgewärmt und in dem außerhalb jeder Behandlungsstation angeordneten Messelement oder einem weiteren von diesem Messelement verschiedenen Messelement gemessen (zweiter Normmesswert (warm)).

Der dann erwärmte Messvorformling wird danach in zumindest eine, vorzugsweise jedoch alle Behandlungselemente untergebracht und innerhalb dieser dann der zweite Messwert (warm) gemessen.

Mit anderen Worten werden in einer solchen Messsequenz jeweils zunächst nur die ersten Werte (Normmesswert und Messwert) und erst anschließend die zweiten Werte (warm) gemessen.

Aus den jeweiligen Differenzen der Temperaturwerte wird somit der Offset und beispielsweise auch die Steigung einer somit erhaltenen mathematischen Messkurve an jeder Station ermittelt und durch die Kalibiereinrichtung an die Referenzkurve angeglichen.

Gemäß zumindest einer Ausführungsform werden zunächst nur die ersten Messwerte vor der Behandlung des Messvorformlings gemessen und erst danach werden die zweiten Messwerte durch das Messelement gemessen. Insofern ist der gesamte Kalibrierungsvorgang zunächst aufgeteilt in einen ersten Teil, während dessen nur jeweils der erste Messwert und der erste Referenzwert gemessen werden und in einen zweiten Teil, während dessen nur der zweite Messwert und der zweite Normmesswert gemessen werden, unterteilt.

Gemäß zumindest einer Ausführungsform ist der Messvorformling ein Vorformling-Dummy oder ein solcher Vorformling, welcher dazu eingerichtet und dazu vorgesehen ist, zu einem Container ausgeblasen zu werden.

Als Vorformling wird hier ein Element bezeichnet, welches die Form eines Vorformlings aufweist. Ein Vorformling-Dummy kann auch dieselben Abmessungen wie ein Vorformling aufweisen.

Insbesondere kann ein Vorformling-Dummy auch dasselbe Material wie ein Vorformling umfassen. Der Vorformling-Dummy kann auch einem Vorformling entsprechen. Insbesondere kann der Vorformling-Dummy im Wesentlichen rund sein. Handelt es sich daher bei dem Messvorformling um einen solchen Vorformling-Dummy, dient der Vorformling-Dummy als ein Testkörper, so dass sich dem Grundsatz nach ein Vorformling-Dummy sich von einem Vorformling insofern auch unterscheiden kann, als dass ein Vorformling-Dummy (Testkörper) nicht dazu geeignet ist, zu einem Container ausgeblasen zu werden. Dies kann sich unter anderem dadurch niederschlagen, als dass der Vorformling-Dummy auch nur teilweise den geometrischen und materialtechnischen Eigenschaften eines zum Ausblasen geeigneten Vorformlings ähnelt. Vorzugsweise handelt es sich jedoch sowohl bei dem Vorformling-Dummy als auch bei dem Vorformling um einen solchen Körper, welcher Wärmestrahlung, insbesondere im infraroten Spektralbereich der elektromagnetischen Strahlung, auf zumindest eine Messelement rückemittiert und/oder reflektiert, so dass Wärmestrahlung besonders einfach von dem Messelement oder dem weiteren Messelement gemessen werden kann. Gemäß zumindest einer Ausführungsform ist in zumindest einem Messelement zumindest eine Referenzfläche verbaut, welche durch die Behandlungsstation aufheizbar ist und wobei der Messvorformling zwischen der Referenzfläche und einem Messsensor, insbesondere einem Temperatursensor des Messelementes, einbringbar ist und wobei ein Strahlungsemissions- und/oder Reflexionspektrum der Referenzfläche zumindest teilweise mit einem Strahlungsemissionsspektrum des Messvorformlings übereinstimmt.

Eine solche Referenzfläche kann innerhalb des Messelementes oder dem weiteren Messelement dann verbaut sein, wenn das Messelement und/oder das weitere Messelement in einer Behandlungsstation verbaut ist und während eines Fertigungsprozesses mit dem Kunststoffvorformling oder dem Vorformling-Dummy mitbewegt wird. Mit anderen Worten kann durch das Mitbewegen des Messelementes auf eine zentrale Messeinrichtung, d.h. ein zentral angeordnetes Messelement, beispielsweise innerhalb einer Kalibrierstation, verzichtet sein, so dass eine Referenzierung jeweils separat in den jeweiligen Behandlungsstationen erfolgen kann.

Vorzugsweise emittiert und/oder reflektiert daher die Referenzfläche in einem solchen Messbereich des Messelementes elektromagnetische Strahlung beispielsweise im infraroten Bereich, so dass eine Strahlungsemission der Referenzfläche besonders einfach dann von dem Messelement gemessen werden kann, wenn kein Messvorformling in oder an dem Messelement zu Messzwecken angeordnet ist.

Gemäß zumindest einer Ausführungsform weist die Behandlungsstation oder eine weitere Behandlungsstation zumindest einen Resonator auf innerhalb dessen das Messelement und/oder Kunststoffvorformlinge erwärmt werden. Dabei kann die Referenzfläche zumindest teilweise oder ganz innerhalb oder außerhalb eines solchen Resonators verbaut sein. Ist die Referenzfläche beispielsweise außerhalb des Resonators angeordnet, ist denkbar, dass sich dann die Referenzfläche an dem Resonator vorbeibewegen kann. Dabei kann die Referenzfläche die gleichen physikalischen und/oder merkmalstechnischen Eigenschaften aufweisen als eine solche Referenzfläche welche mit dem und/oder in dem Resonator verbaut ist.

Gemäß zumindest einer Ausführungsform handelt es sich bei der Behandlungsstation um eine Heizstation, insbesondere um eine Mikrowelle. Derartige Behandlungsstationen sind beispielsweise bereits in der Druckschrift EP 2210731 A2 beschrieben, so dass der Gesamtoffenbarungsgehalt dieser Druckschrift vollständig durch Rückbezug hiermit aufgenommen wird. Insofern zählt die Gesamtoffenbarung der EP 2210731 A2 auch zur Offenbarung dieser Anmeldung.

Mit anderen Worten ist hiermit auch eine Vorrichtung zum Behandeln von Kunststoffvorformlingen beschrieben, innerhalb derer oder mittels derer das obig beschriebene Verfahren durchgeführt werden kann.

Des Weiteren betrifft die vorliegende Anmeldung eine Vorrichtung nach dem Wortlaut des Anspruchs 12.

Gemäß zumindest einer Ausführungsform umfasst die Vorrichtung zum Kalibrieren zumindest eines Behandlungselementes, insbesondere zumindest eines Temperatursensors, eine Behandlungsstation zum Behandeln von Kunststoffvorformlingen und zumindest ein Messelement, wobei durch das Messelement zumindest ein erster Messwert vor einer Behandlung eines Messvorformlings durch die Behandlungsstation messbar ist und ein zweiter Messwert, während oder nach der Behandlung durch die Behandlungsstation, durch das Messelement oder durch ein weiteres Messelement messbar ist.

Anhand zumindest dieser beiden Messwerte wird eine mathematische Messkurve, insbesondere eine mathematische Messgerade durch das Messelement erzeugt, wobei zumindest eine Kalibriereinrichtung von der Vorrichtung umfasst ist, welche die Abweichung der gemessenen Messkurve von einer Referenzkurve ermittelt und diese Abweichung zumindest teilweise durch Anpassung von Behandlungsparametern der Behandlungsstation verringert.

Des Weiteren betrifft die vorliegende Anmeldung eine Vorrichtung zum Erwärmen von Kunststoffvorformlingen mittels elektromagnetischer Strahlung, insbesondere Mikrowellenstrahlung, aufweisend mindestens eine Behandlungsstation sowie zumindest eine Vorrichtung zum Kalibrieren nach Anspruch 12. Dabei sei darauf hingewiesen, dass die hier beschriebenen Merkmale betreffend das obig beschriebene Verfahren und die obige Vorrichtung zum Kalibrieren ebenso auch für die hier beschriebene Vorrichtung zum Behandeln von Kunststoffvorformlingen offenbart ist und umgekehrt.

Dabei kann die nun beschriebene Vorrichtung zumindest eine Mikrowellenerwärmungseinheit und mindestens einen Mikrowellenerzeuger, einen Mikrowellenleiter sowie einen Resonator aufweisen. Der Mikrowellenerzeuger kann z.B. ein Magnetron, ein Klystron oder ein Gyrotron sein, wobei die Erzeugung der Wellen auf beliebige Art und Weise erfolgen kann. Die Mikrowellenleiter sind vorzugsweise Hohlleiter, wobei runde bzw. rechteckige Querschnitte besonders zu bevorzugen sind. Eine Verwendung von Koaxialleitern ist nicht auszuschließen.

Dabei weist die hier beschriebene Vorrichtung die gleichen vorteilhaften Ausgestaltungen und Vorteile auf wie das obig beschriebene Verfahren.

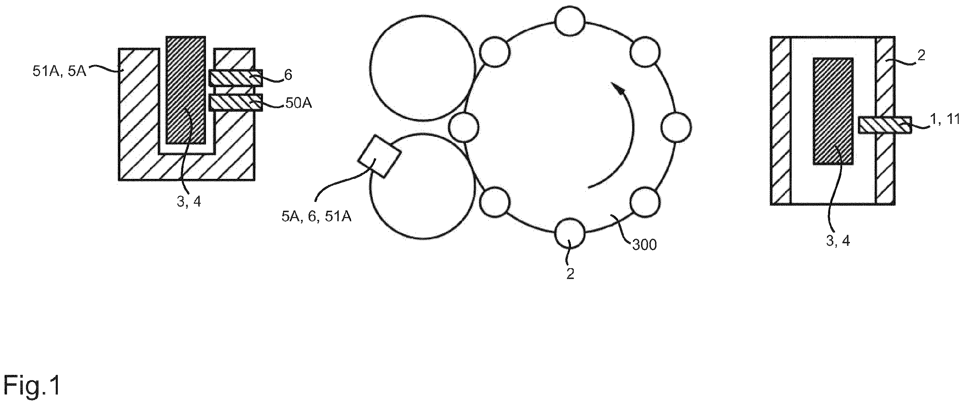

Die Erfindung wird nachfolgend anhand der Figuren 1 bis 4 näher erläutert.

Die Figuren 1 - 4 stellen daher einzelne Ausführungsbeispiele einer Vorrichtung zum Kalibrieren von Behandlungselementen, welche innerhalb einer Vorrichtung zum Behandeln von Kunststoffvorformlingen verbaut ist, dar. Die Figuren 5A und 5B stellen eine Angleichung der gemessenen Temperaturkurve an die Referenz(temperatur)kurve dar.

In den Ausführungsbeispielen und den Figuren sind gleiche oder gleichwirkende Bestandteile jeweils mit den gleichen Bezugszeichen versehen. Die hier dargestellten Elemente sind nicht als maßstabsgerecht anzusehen, vielmehr können einzelne Elemente zum besseren Verständnis übertrieben groß dargestellt sein.

In der Figur 1 ist in einer schematischen Darstellung innerhalb eines mittigen Teilbilds eine hier beschriebene Vorrichtung 300 zum Behandeln von Kunststoffvorformlingen gezeigt.

Entsprechend eines durch die Vorrichtung 300 durchgeführten Verfahrens 100 zum Kalibrieren zumindest eines Behandlungselementes 1 insbesondere zumindest eines Temperatursensors 11 einer Behandlungsstation 2 umfasst dieses Verfahren 100 zunächst einen ersten Schritt, bei dem ein Messvorformling 4 bereitgestellt wird, wobei mittels eines Messelementes 5A ein erster ReferenzpunktN1 des Messvorformlings 4 (vorliegend ein Kunststoffvorformling 3) noch vor dessen Behandlung durch die Behandlungsstation 2 gemessen wird. Insbesondere ist nämlich in der Figur 1 dargestellt, dass diese Messung durch das Messelement 5A, 51A außerhalb des Rundläufers, an dem die Behandlungsstationen 2 angeordnet sind, vorgenommen wird. Zur Messung in Frage kommt jedoch auch ein weiteres Messelement 5B, 51B. In dem Ausführungsbeispiel gemäß der Figur 1 ist daher das erste Messelement 5A an einem Einlaufstern angeordnet, so dass vor dem Einlaufen des Messvorformlings 4 zunächst der noch kalte Messvorformling auf dessen Temperatur gemessen wird. In der Figur 1 ist daher eine zentrale Messung dargestellt, sodass das Messelement 5A eine zentrale Messeinrichtung darstellt.

In einem weiteren Schritt wird der Messvorformling 4 nacheinander an jede Behandlungsstation 2 angebracht und auch hierbei eine Temperaturmessung mittels eines Temperatursensors 11 vorgenommen. Diese Temperaturmessung gibt daher den ersten Temperaturmesswert T1 wieder. Da die erste Messung in der zentralen Messeinrichtung 5A noch vor der (Temperatur-)Behandlung stattfindet, sind die ersten Messwerte T1 und N1 üblicherweise kalt. Danach wird der Messvorformling 4 auf eine definierte Temperatur erwärmt und wieder in dem Messelement 5A gemessen, was somit den zweiten Normtemperaturmesswert N2 wiedergibt. Der erwärmte Messvorformling 4 wird anschließend wieder in jede der Behandlungsstationen 2 eingebracht, wobei somit der zweite Temperaturmesswert T2 aufgenommen wird. Aus den jeweiligen Differenzen der Temperaturwerte wird nun der Offset mittels des Messelementes 5A gemessen, wobei durch eine Kalibriereinrichtung 6 eine Abweichung einer von dem Messelement 5A erstellten Temperaturkurve T12 von einer wiederum von dem Messelement 5A erstellten Referenz(temperatur)kurve N12 ermittelt wird und diese Abweichung zumindest teilweise durch Anpassung der Behandlungsparameter der einzelnen Behandlungsstationen jeweils verändert, beispielsweise beseitigt wird.

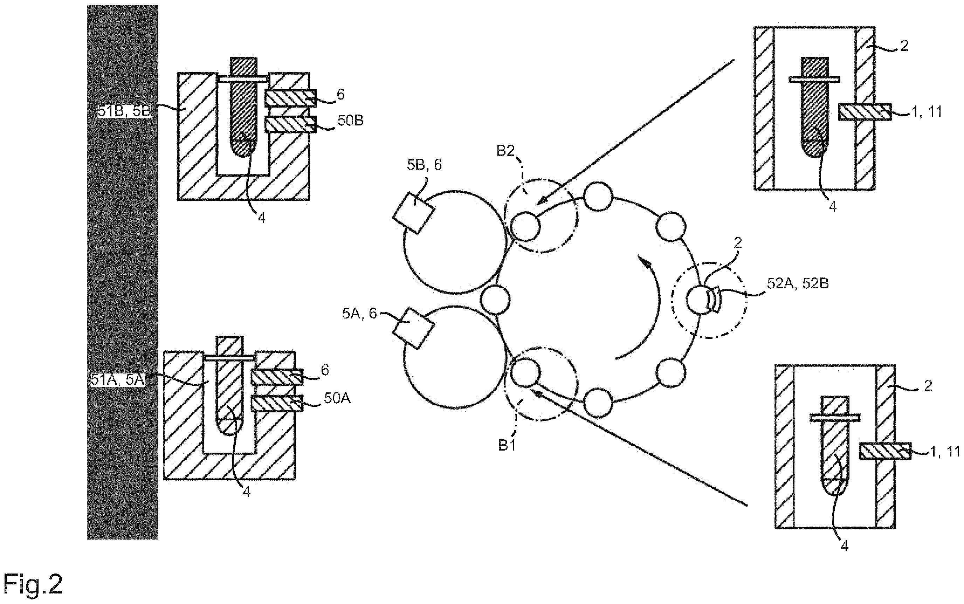

In der Figur 2 ist ein weiteres Ausführungsbeispiel eines hier beschriebenen Verfahrens 100 gezeigt, bei dem im Unterschied zu dem Ausführungsbeispiel gemäß der Figur 1 die Referenz(temperatur)messwerte N1, N2 ebenso außerhalb der Behandlungsstation 2 gemessen werden, jedoch in zwei zentralen Messeinrichtungen (= Messelemente) 5A, 51A und 5B, 51B Der noch kalte Messvorformling 4 wird vor dem Einführen in die Behandlungsstation zunächst in der zentralen Messvorrichtung 5A gemessen, so dass ein erster Referenz(temperatur)messwert N1 gemessen werden kann. Danach wird der Messvorformling 4 in die Behandlungsstation 2 eingeführt und beispielsweise mittels einer in der Behandlungsstation 2 verbauten Heizstation noch vor Beginn der Heizphase der erste Temperaturmesswert T1 innerhalb eines Bereichs B1 aufgenommen.

Nachdem der Messvorformling 4 dann erwärmt wurde, wird in der Heizstation der Temperaturwert des erwärmten Messvorformlings 4 innerhalb eines Bereich B2 gemessen, so dass der zweite Temperaturmesswert T2 entsteht. Die Bereiche B1 und B2 überlappen daher vorzugsweise nicht miteinander. Insbesondere ist der Bereich B1 ausschließlich derjenige Bereich innerhalb dessen noch keine Erwärmung stattfindet. Erst nach dem Verlassen des Bereiches B1 wird der Messvorformling 4 daher erwärmt. Danach wird das Produkt, d.h. der Messvorformling 4 aus der Heizstation entnommen und in einem nachgelagerten weiteren Messelement 5B, welches beispielsweise an einem Auslaufstern montiert ist, der zweite Normtemperaturmesswert N2 aufgenommen.

Aus den jeweiligen Differenzen können daher die Temperaturwerte und deren Abweichungen, d.h. der Offset von den Normtemperaturwerten, gemessen werden. Zudem kann in jedem der Ausführungsbeispiele darüber hinaus auch eine Steigung der Temperaturkurve T12 an eine Steigung der Normtemperaturkurve N12 angepasst werden. Aus den jeweiligen Differenzen kann der Offset an allen Stationen gleich eingestellt werden bzw. die Werte können aneinander angepasst werden. Dies kann bei Ausführungsbeispiel 2 vorzugsweise im laufenden Betrieb, d.h. während einer Behandlung des Preforms, stattfinden.

In der Figur 2 ist jedoch gleichzeitig der Fall beschrieben, wenn die Messelemente 5A, 5B mit den Behandlungsstationen 2 mitbewegt werden. Dann handelt es sich um dezentrale Messelemente 52A, 52B. Angedeutet ist dies in der Figur 2 mit gestrichelten Kreislinie innerhalb derer beispielhaft ein solches dezentrales Messelement 52A, 52B mit dem Behandlungselement 2 mitbewegt wird, und somit auch an dem Behandlungselement 2 montiert sein können. Denkbar ist auch, dass dann jedes Messelement 52A, 52B über eine entsprechende Steuereinheit mit einer Bewegung des dem Messelement 52A, 52B zugeordneten Behandlungselements 2 bewegungssynchronisiert sein kann.

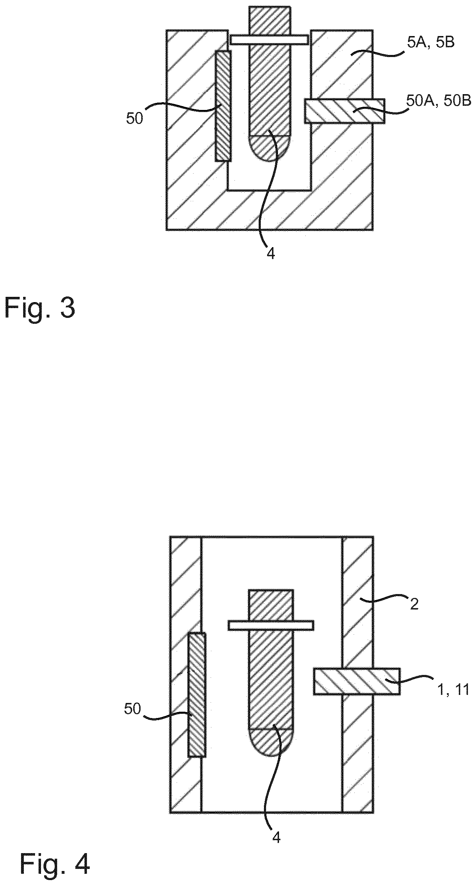

Die Figur 3 beschreibt in einer schematischen Seitenansicht eine konkretere Ausführungsform des hier beschriebenen Messelementes 5A und/oder 5B, welche auch in den Ausführungsformen gemäß den Figuren 1 und 2 verbaut sein kann. Zudem kann grundsätzlich auch gelten, dass die Referenzkurve N1 mittels des Messelements 5A, 5B; 51A, 51B; 52A, 52 aufgenommen wird, indem durch das Messelement 5A, 5B; 51A, 51B; 52A, 52 zumindest ein erster Referenzwert N1 des Messvorformlings 4 vor oder nach dessen Behandlung innerhalb der Behandlungsstation 2 gemessen wird, und ein zweiter Referenzwert N2 des Messvorformlings 4 vor, während oder nach der Behandlung innerhalb der Behandlungsstation 2 durch ein weiteres Messelement 5A, 5B; 51A, 51B; 52A, 52B gemessen wird, und anhand zumindest dieser beiden Referenzwerte N1, N2 die Referenzkurve N12, insbesondere die mathematische Referenzgerade N12, durch zumindest ein Messelement 5A, 5B; 51A, 51B; 52A, 52B erzeugt wird

Entsprechend der Figur 3 weist das dort beschriebene Messelement 5A, 5B eine Referenzfläche 50 auf, welche zu Kalibrierungszwecken eines Temperatursensors 50A, 50B an einer Halterung des Messelementes 5A, 5B montiert ist. In einem Aufnahmeraum 60 des Messelementes 5A, 5B kann daher der Messvorformling 4 eingebracht werden, so dass im belegten Zustand des Messelementes 5A, 5B der Messvorformling 4 zwischen der Referenzfläche 50 und den Temperatursensoren 50A, 50B angeordnet ist.

Die in der Figur 3 beschriebene Ausführungsform erweist sich deshalb als besonders vorteilhaft, weil eine absolute Messgenauigkeit aller Behandlungsstationen 2 in der Regel von den jeweiligen Messelementen 5A, 5B abhängt. Falls diese nämlich einen Messfehler bezüglich des Offsets und/oder einer Steigung haben, besteht die Gefahr, dass dieser Fehler bei der Synchronisation aller Behandlungsstationen 2 gleichartig weitergegeben wird.

Um diesen Fehler beispielsweise bei zentral außerhalb der Behandlungsstationen 2 angeordneten Messelementen 5A, 5B zu vermeiden, ist daher die Referenzfläche 50 vorgesehen, an der eine Kontakttemperaturmessung vorgenommen werden kann.

Wenn nun der Messvorformling 4 in das Messelement 5A, 5B eingebracht ist, ist der Temperatursensor 50A, 50B auf die Referenzfläche 50 gerichtet. Somit kann ein möglicher Messfehler in den Temperatursensoren 50A, 50B erkannt und korrigiert werden.

Vorzugsweise weist daher generell die Referenzfläche 50 solche Emissionseigenschaften auf, welche zumindest teilweise innerhalb eines Emissionsbereiches liegen, welche auch von dem Temperatursensoren 50A, 50B detektiert werden können.

Um die jeweils zweiten Messpunkte (heiß) ohne großen Messfehler erfassen zu können, kann daher die Referenzfläche 50 auf eine ähnliche Temperatur beheizt werden wie beispielsweise der Messvorformling 4. Insbesondere ist daher denkbar, dass sich die beiden Temperaturen um weniger als 10%, vorzugsweise weniger als 5% unterscheiden. Somit kann die Kalibrierung auf die Referenzfläche 50 in einem ähnlichen Temperaturbereich erfolgen wie die eigentliche Temperaturmessung.

In der Figur 4 ist eine zumindest im Hinblick auf die Figuren 1 und 2 alternative Ausführungsform des hier beschriebenen Verfahrens 100 gezeigt, bei dem auf eine zentrale und außerhalb der Behandlungsstation 2 durchgeführte Referenz(temperatur)messung vollständig verzichtet ist und eine solche Messung stattdessen in den jeweiligen Behandlungsstationen 2 selbst erfolgt.

Dazu kann beispielsweise in jede der Behandlungsstationen eine wie in der Figur 3 beschriebene Referenzfläche eingebaut sein, so dass diese Referenzfläche 50 wiederum im Messbereich des Temperatursensors liegt, wenn kein Messvorformling 4 darin angeordnet ist.

Vorzugsweise weist daher zumindest eine Behandlungsstation einen Kontakttemperatursensor auf sowie eine Möglichkeit zur Beheizung bis zu einer maximalen Prozesstemperatur.

Mit Hilfe des Kontakttemperatursensors kann der Prozesstemperatursensor daher referenziert werden.

Im unbeheizten Zustand wird daher jeweils der erste Messpunkt (kalt) ermittelt, wobei im beheizten Zustand entsprechend der jeweils zweite Messpunkt (heiß) gemessen wird.

Dabei ist denkbar, dass die Referenzierung somit auch innerhalb des Prozesses erfolgen kann, etwa wenn das fertige Produkt, d.h. der Messvorformling 4 entfernt und das neue noch nicht eingelegt ist.

Vorzugsweise weisen in einer derartigen Ausführungsform die Kontakttemperatursensoren 50A, 50B in den einzelnen Behandlungsstationen 2 ein möglichst gleichartiges Verhalten auf, um eine homogene und gleichmäßige Temperaturmessung vornehmen zu können.

### Bezugszeichenliste

- 1: Behandlungselement
- 2: Behandlungsstation
- 3: Kunststoffvorformling
- 4: Messvorformling
- 5A, 5B: Messelemente
- 6: Kalibriereinrichtung
- 50: Referenzfläche
- 50A, 50B: Temperatursensoren
- 11: Temperatursensor
- 100: Verfahren zum Kalibrieren
- 200: Vorrichtung zum Kalibrieren
- 300: Vorrichtung zum Erwärmung von Kunststoffvorformlingen
- T1, T2: Messwerte
- N1, N2: Referenzmesswerte
- T12: Temperaturkurve
- N12: Referenztemperaturkurve

## Patentansprüche

1. Verfahren (100) zum Kalibrieren zumindest eines Behandlungselements (1), nämlich eines Temperatursensors (11) einer Behandlungsstation (2) zum Behandeln von Kunststoffvorformlingen (3), wobei
zunächst ein Messvorformling (4) bereitgestellt wird, wobei
durch zumindest ein Messelement (5A) zumindest ein erster Messwert (T1) des Messvorformlings (4) vor oder nach dessen Behandlung durch die Behandlungsstation (2) gemessen wird und
anhand zumindest dieses Messwerts (T1) ein, insbesondere mathematischer, Messpunkt (T1) durch das Messelement (5A) aufgenommen wird,
**gekennzeichnet durch**
zumindest eine Kalibriereinrichtung (6), welche eine Abweichung des gemessenen Messpunkts (T1) von einem Referenzpunkt (N1) ermittelt und diese Abweichung zumindest teilweise durch Anpassung von Behandlungsparametern der Behandlungsstation (2) verringert.

2. Verfahren (100) nach Anspruch 1,
**dadurch gekennzeichnet, dass**
ein zweiter Messwert (T2) des Messvorformlings (4), während oder nach der Behandlung durch die Behandlungsstation (2), durch das Messelement (5A) oder ein weiteres Messelement (5B) gemessen wird und
anhand zumindest dieser beiden Messwerte (T1, T2) eine mathematische Messkurve (T12), insbesondere eine mathematische Messgerade (T12), durch das Messelement (5A, 5B) aufgenommen wird, wobei
zumindest die Kalibriereinrichtung (6) eine Abweichung der gemessenen Messkurve (T12) von einer mathematischen Referenzkurve (N12) ermittelt und diese Abweichung zumindest teilweise durch Anpassung von Behandlungsparametern der Behandlungsstation (2) verringert wird.

3. Verfahren (100) nach Anspruch 2,
**dadurch gekennzeichnet, dass**
an zumindest zwei Behandlungsstationen (2) jeweils zumindest ein erster Messwert (T1) und/oder zumindest ein zweiter Messwert (T2) gemessen wird und die sich daraus jeweils ergebenden Messkurven (T12) mittels der Kalibriereinrichtung (6) an die Referenzkurve (N12) angepasst werden.

4. Verfahren (100) nach zumindest einem der vorhergehenden Ansprüche,
**dadurch gekennzeichnet, dass**
zumindest ein Messelement (5A, 5B; 51A, 51B) in Form einer zentralen Messeinrichtung ausgebildet ist, welche außerhalb der Behandlungsstation (2) angeordnet ist, wobei mittels der Messelemente (5A, 5B; 51A, 51B) der erste Messwert (T1) und/oder der zweite Messwert (T2) gemessen wird.

5. Verfahren (100) nach zumindest einem der vorhergehenden Ansprüche,
**dadurch gekennzeichnet, dass**
zumindest ein Messelement (5A, 5B; 52A, 52B) innerhalb der Behandlungsstation (2) dezentral verbaut ist und mit der Behandlungsstation (2) mitbewegt wird, wobei mittels der Messelemente (5A, 5B; 52A, 52B) der erste Messwert (T1) und/oder der zweite Messwert (T2) gemessen wird.

6. Verfahren (100) nach zumindest einem der vorhergehenden Ansprüche,
**dadurch gekennzeichnet, dass**
die Referenzkurve (N12) mittels des Messelements (5A, 5B; 51A, 51B; 52A, 52B) aufgenommen wird, indem durch das Messelement (5A, 5B; 51A, 51B; 52A, 52B) zumindest ein erster Referenzwert (N1) des Messvorformlings (4) vor oder nach dessen Behandlung innerhalb der Behandlungsstation (2) gemessen wird und
ein zweiter Referenzwert (N2) des Messvorformlings (4) vor, während oder nach der Behandlung innerhalb der Behandlungsstation (2) durch ein weiteres Messelement (5A, 5B; 51A, 51B; 52A, 52B) gemessen wird und anhand zumindest dieser beiden Referenzwerte (N1, N2) die Referenzkurve (N12), insbesondere die mathematische Referenzgerade (N12), durch zumindest ein Messelement (5A, 5B; 51A, 51B; 52A, 52B) erzeugt wird.

7. Verfahren (100) nach zumindest einem der vorhergehenden Ansprüche,
**dadurch gekennzeichnet, dass**
zunächst nur die ersten Messwerte (T1, N1), vor dem Behandeln des Messvorformlings (4), durch das Messelement (5A, 5B; 51A, 51B) gemessen werden und erst danach die zweiten Messwerte (T2, N2) durch das Messelement (5A, 5B; 52A, 52B) gemessen werden.

8. Verfahren (100) nach zumindest einem der vorhergehenden Ansprüche,
**dadurch gekennzeichnet, dass**
der Messvorformling (4) ein Vorformlingdummy oder ein Vorformling ist, welcher dazu eingerichtet und vorgesehen ist, zu einem Container ausgeblasen zu werden.

9. Verfahren (100) nach zumindest einem der vorhergehenden Ansprüche,
**dadurch gekennzeichnet, dass**
in zumindest einem Messelement (5A, 5B; 51A, 51B; 52A, 52B) zumindest eine Referenzfläche (50) verbaut ist, welche durch die Behandlungsstation (2) aufheizbar ist, und wobei der Messvorformling (4) zwischen der Referenzfläche (50) und einem Messsensor (50A), insbesondere einem Temperatursensor (50A), des Messelements (5A, 5B; 51A, 51B; 52A, 52B) einbringbar ist, und wobei ein Strahlungsemissionsspektrum der Referenzfläche (50) zumindest teilweise mit einem Strahlungsemissionsspektrum des Messvorformlings (4) übereinstimmt.

10. Verfahren (100) nach zumindest einem der vorhergehenden Ansprüche,
**dadurch gekennzeichnet, dass**
es sich bei der Behandlungsstation (2) um eine Heizstation, insbesondere um eine Mikrowelle, handelt.

11. Verfahren (100) nach zumindest einem der vorhergehenden Ansprüche,
**dadurch gekennzeichnet, dass**
die Behandlungsstation (2) oder eine weitere Behandlungsstation zumindest einen Resonator aufweist, innerhalb dessen das Messelement (5A, 5B; 51A, 51B; 52A, 52B) und/oder der Kunststoffvorformling (3) erwärmt werden, wobei eine Referenzfläche (50) zumindest teilweise oder ganz außerhalb eines solchen Resonators verbaut ist.

12. Vorrichtung (200) zum Kalibrieren zumindest eines Behandlungselements (1), nämlich eines Temperatursensors (11) einer Behandlungsstation (2) zum Behandeln von Kunststoffvorformlingen (3), wobei
durch zumindest ein Messelement (5A) zumindest ein erster Messwert (T1) des Messvorformlings (4) vor oder nach dessen Behandlung durch die Behandlungsstation (2) messbar ist, und
anhand zumindest dieses Messwerts (T1) ein, insbesondere mathematischer, Messpunkt (T1) durch das Messelement (5A) aufnehmbar ist,
**gekennzeichnet durch**
zumindest eine Kalibriereinrichtung (6), welche dazu eingerichtet und dafür vorgesehen ist, eine Abweichung des gemessenen Messpunkts (T1) von einem Referenzpunkt (N1) zu ermitteln und diese Abweichung zumindest teilweise durch Anpassung von Behandlungsparametern der Behandlungsstation (2) zu verringern.

13. Vorrichtung (300) zum Erwärmen von Kunststoffvorformlingen (3) mittels elektromagnetischer Strahlung, insbesondere Mikrowellenstrahlung, aufweisend mindestens eine Behandlungsstation (2),
**gekennzeichnet durch**
zumindest eine Vorrichtung (200) zum Kalibrieren nach Anspruch 12.

## Claims

1. Method (100) for calibrating at least one processing element (1), in particular a temperature sensor (11) of a processing station (2) for processing plastic preforms, wherein
initially a measurement preform (4) is provided, wherein
by means of at least one measuring element (5A), at least a first measurement value (T1) of the measurement preform (4) is measured before or after its processing by the processing station (2), and
using at least this measurement value (T1), an in particular mathematical measurement point (T1) is recorded by the measuring element (5A),
**characterised by**
at least one calibration device (6) which determines a deviation of the measured point (T1) from a reference point (N1) and reduces this deviation at least partially by adaptation of processing parameters of the processing station (2).

2. Method (100) according to claim 1,
**characterised in that**
a second measurement value (T2) of the measurement preform (4) is measured by the measuring element (5A) or a further measuring element (5B) during or after processing by the processing station (2), and
using at least these two measurement values (T1, T2), a mathematical measurement curve (T12), in particular a mathematical measurement line (T12) is recorded by the measuring element (5A, 5B), wherein
at least the calibration device (6) determines a deviation of the measured curve (T12) from a mathematical reference curve (N12), and this deviation is reduced at least partially by adaptation of processing parameters of the processing station (2).

3. Method (100) according to claim 2,
**characterised in that**
at least one first measurement value (T1) and/or at least one second measurement value (T2) respectively are measured at least at two processing stations (2), and the resulting measurement curves (T12) respectively are adapted to the reference curve (N12) by means of the calibration device (6).

4. Method (100) according to at least one of the preceding claims,
**characterised in that**
at least one measuring element (5A, 5B; 51A, 51B) is configured in the form of a central measurement device which is arranged outside the processing station (2), wherein the first measurement value (T1) and/or the second measurement value (T2) are measured by means of the measuring elements (5A, 5B; 51A, 51B).

5. Method (100) according to at least one of the preceding claims,
**characterised in that**
at least one measuring element (5A, 5B; 51A, 51B) is installed decentrally inside the processing station (2) and moved with the processing station (2), wherein the first measurement value (T1) and/or the second measurement value (T2) are measured by means of the measuring elements (5A, 5B; 51A, 51B).

6. Method (100) according to at least one of the preceding claims,
**characterised in that**
the reference curve (N12) is recorded by means of the measuring element (5A, 5B; 51A, 51B; 52A, 52B), **in that** the measuring element measures (5A, 5B; 51A, 51B; 52A, 52B) at least one first reference value (N1) of the measurement preform (4) before or after its processing inside the processing station (2), and
a second reference value (N2) of the measurement preform (4) is measured by a further measuring element (5A, 5B; 51A, 51B; 52A, 52B) before, during or after processing inside the processing station (2), and using at least these two reference values (N1, N2), the reference curve (N12), in particular the mathematical reference line (N12) is produced by at least one measuring element (5A, 5B; 51A, 51B; 52A, 52B).

7. Method (100) according to at least one of the preceding claims,
**characterised in that**
initially only the first measurement values (T1, N1) are measured by the measuring element (5A, 5B; 51A, 51B) before processing of the measurement preform (4), and only thereafter the second measurement values (T2, N2) are measured by the measuring element (5A, 5B; 52A, 52B).

8. Method (100) according to at least one of the preceding claims,
**characterised in that**
the measurement preform (4) is a preform dummy or a preform which is configured and provided to be expanded into a container.

9. Method (100) according to at least one of the preceding claims,
**characterised in that**
at least one reference face (50) is installed in at least one measuring element (5A, 5B; 51A, 51B; 52A, 52B) which can be heated by the processing station (2), and wherein the measurement preform (4) can be brought between the reference face (50) and a measurement sensor (50A), in particular a temperature sensor (50A) of the measuring element (5A, 5B; 51A, 51B; 52A, 52B), and wherein a radiation emission spectrum of the reference face (50) at least partially corresponds to a radiation emission spectrum of the measurement preform (4).

10. Method (100) according to at least one of the preceding claims,
**characterised in that**
the processing station (2) is a heating station, in particular a microwave oven.

11. Method (100) according to at least one of the preceding claims,
**characterised in that**
the processing station (2) or a further processing station comprises at least one resonator, within which the measuring element (5A, 5B; 51A, 51B; 52A, 52B) and/or the plastic preform (3) are heated, wherein a reference face (50) is installed at least partially or fully outside such a resonator.

12. Device (200) for calibrating at least one processing element (1), in particular a temperature sensor (11) of a processing station (2) for processing plastic preforms (3), wherein
by means of at least one measuring element (5A), at least one first measurement value (T1) of the measurement preform (4) can be measured before or after its processing by the processing station (2), and
using at least this measurement value (T1), an in particular mathematical measurement point (T1) can be recorded by the measuring element (5A),
**characterised by**
at least one calibration device (6) which is configured and provided for determining a deviation of the measured point (T1) from a reference point (N1) and reducing this deviation at least partially by adaptation of processing parameters of the processing station (2).

13. Device (300) for heating plastic preforms (3) by means of electromagnetic radiation, in particular microwave radiation, comprising at least one processing station (2),
**characterised by**
at least one device (200) for calibrating according to claim 12.

## Revendications

1. Procédé (100) pour l'étalonnage d'au moins un élément de traitement (1), à savoir d'un capteur de température (11) d'une station de traitement (2) pour le traitement de préformes en matière plastique (3), dans lequel une préforme de mesure (4) est tout d'abord fournie, dans lequel au moins une première valeur de mesure (T1) de la préforme de mesure (4) est mesurée par au moins un élément de mesure (5A) avant ou après le traitement de celle-ci par la station de traitement (2), et
un point de mesure (T1), en particulier mathématique, est enregistré par l'élément de mesure (5A) sur la base d'au moins cette valeur de mesure (T1),
**caractérisé par**
au moins un système d'étalonnage (6), lequel détermine un écart du point de mesure (T1) mesuré par rapport à un point de référence (N1) et réduit cet écart au moins en partie par adaptation de paramètres de traitement de la station de traitement (2).

2. Procédé (100) selon la revendication 1,
**caractérisé en ce que**
une deuxième valeur de mesure (T2) de la préforme de mesure (4) est mesurée par l'élément de mesure (5A) ou un autre élément de mesure (5B), pendant ou après le traitement par la station de traitement (2), et une courbe de mesure (T12) mathématique, en particulier une droite de mesure (T12) mathématique, est enregistrée par l'élément de mesure (5A, 5B) sur la base d'au moins ces deux valeurs de mesure (T1, T2), dans lequel
au moins le système d'étalonnage (6) détermine un écart de la courbe de mesure (T12) mesurée par rapport à une courbe de référence (N12) mathématique, et cet écart est réduit au moins en partie par adaptation de paramètres de traitement de la station de traitement (2).

3. Procédé (100) selon la revendication 2,
**caractérisé en ce que**
respectivement au moins une première valeur de mesure (T1) et/ou au moins une deuxième valeur de mesure (T2) est mesurée sur au moins deux stations de traitement (2), et les courbes de mesure (T12) en résultant respectivement sont adaptées à la courbe de référence (N12) au moyen du système d'étalonnage (6).

4. Procédé (100) selon au moins l'une des revendications précédentes,
**caractérisé en ce que**
au moins un élément de mesure (5A, 5B; 51A, 51B) est réalisé sous forme d'un système de mesure central, lequel est disposé à l'extérieur de la station de traitement (2), dans lequel la première valeur de mesure (T1) et/ou la deuxième valeur de mesure (T2) est mesurée au moyen des éléments de mesure (5A, 5B; 51A, 51B).

5. Procédé (100) selon au moins l'une des revendications précédentes,
**caractérisé en ce que**
au moins un élément de mesure (5A, 5B; 52A, 52B) est monté de manière décentralisée à l'intérieur de la station de traitement (2), et déplacé conjointement avec la station de traitement (2), dans lequel la première valeur de mesure (T1) et/ou la deuxième valeur de mesure (T2) est mesurée au moyen des éléments de mesure (5A, 5B; 52A, 52B).

6. Procédé (100) selon au moins l'une des revendications précédentes,
**caractérisé en ce que**
la courbe de référence (N12) est enregistrée au moyen de l'élément de mesure (5A, 5B; 51A, 51B; 52A, 52B), du fait qu'au moins une première valeur de référence (N1) de la préforme de mesure (4) est mesurée par l'élément de mesure (5A, 5B; 51A, 51B; 52A, 52B) avant ou après le traitement de celle-ci à l'intérieur de la station de traitement (2), et une deuxième valeur de référence (N2) de la préforme de mesure (4) est mesurée par un autre élément de mesure (5A, 5B; 51A, 51B; 52A, 52B) avant, pendant ou après le traitement à l'intérieur de la station de traitement (2), et la courbe de référence (N12), en particulier la droite de référence (N12) mathématique, est produite par au moins un élément de mesure (5A, 5B; 51A, 51B; 52A, 52B) sur la base d'au moins ces deux valeurs de référence (N1, N2).

7. Procédé (100) selon au moins l'une des revendications précédentes,
**caractérisé en ce que**
tout d'abord seules les premières valeurs de mesure (T1, N1) sont mesurées par l'élément de mesure (5A, 5B; 51A, 51B), avant le traitement de la préforme de mesure (4), et ce n'est qu'ensuite que les deuxièmes valeurs de mesure (T2, N2) sont mesurées par l'élément de mesure (5A, 5B; 52A, 52B).

8. Procédé (100) selon au moins l'une des revendications précédentes,
**caractérisé en ce que**
la préforme de mesure (4) est une préforme factice ou une préforme, laquelle est conçue et prévue pour être soufflée en un récipient.

9. Procédé (100) selon au moins l'une des revendications précédentes,
**caractérisé en ce que**
au moins une surface de référence (50), laquelle peut être chauffée à travers la station de traitement (2), est montée dans au moins un élément de mesure (5A, 5B; 51A, 51B; 52A, 52B), et dans lequel la préforme de mesure (4) peut être introduite entre la surface de référence (50) et un capteur de mesure (50A), en particulier un capteur de température (50A), de l'élément de mesure (5A, 5B; 51A, 51B; 52A, 52B), et dans lequel un spectre d'émission de rayonnement de la surface de référence (50) coïncide au moins en partie avec un spectre d'émission de rayonnement de la préforme de mesure (4).

10. Procédé (100) selon au moins l'une des revendications précédentes,
**caractérisé en ce que**
il s'agit pour la station de traitement (2) d'une station de chauffage, en particulier d'un four à micro-ondes.

11. Procédé (100) selon au moins l'une des revendications précédentes,
**caractérisé en ce que**
la station de traitement (2) ou une autre station de traitement présente au moins un résonateur, à l'intérieur duquel l'élément de mesure (5A, 5B; 51A, 51B; 52A, 52B) et/ou la préforme en matière plastique (3) sont chauffés, dans lequel une surface de référence (50) est montée au moins en partie ou complètement à l'extérieur d'un tel résonateur.

12. Dispositif (200) pour l'étalonnage d'au moins un élément de traitement (1), à savoir d'un capteur de température (11) d'une station de traitement (2) pour le traitement de préformes en matière plastique (3), dans lequel au moins une première valeur de mesure (T1) de la préforme de mesure (4) peut être mesurée par au moins un élément de mesure (5A) avant ou après le traitement de celle-ci par la station de traitement (2), et
un point de mesure (T1), en particulier mathématique, est enregistré par l'élément de mesure (5A) sur la base d'au moins cette valeur de mesure (T1),
**caractérisé par**
au moins un système d'étalonnage (6), lequel est conçu pour et destiné à déterminer un écart du point de mesure (T1) mesuré par rapport à un point de référence (N1) et réduire cet écart au moins en partie par adaptation de paramètres de traitement de la station de traitement (2).

13. Dispositif (300) pour le chauffage de préformes en matière plastique (3) au moyen d'un rayonnement électromagnétique, en particulier rayonnement micro-onde, présentant au moins une station de traitement (2),
**caractérisé par**
au moins un dispositif (200) pour l'étalonnage selon la revendication 12.
